# EUROPÄISCHE PATENTSCHRIFT

(11) **EP 2 746 195 B1**
(45) Veröffentlichungstag und Bekanntmachung des Hinweises auf die Patenterteilung: **18.11.2015**
(21) Anmeldenummer: 13186264.1
(22) Anmeldetag: 27.09.2013
(51) Int. Cl.: B65G 15/42

(54) **Verfahren zum Einbringen einer in Querrichtung verlaufenden Achse in eine Öffnung einer in Förderrichtung verlaufenden Seitenwand eines elastomerhaltigen Fördergurtes**
Method for introducing a transverse axis into an opening of a side wall of an elastomer conveyor belt moving in the conveying direction
Procédé d'introduction d'un axe s'étendant en direction transversale dans une ouverture d'une paroi latérale, s'étendant dans la direction de transport, d'une courroie de transport contenant un élastomère

(30) Priorität: 20.12.2012 DE 102012112748
(43) Veröffentlichungstag der Anmeldung: 25.06.2014
(73) Patentinhaber: ContiTech Transportbandsysteme GmbH, 30165 Hannover (DE)
(72) Erfinder: Großkreuz, Gernot, 07407 Rudolstadt (DE); Litz, Friedhelm, 45770 Marl (DE)
(74) Vertreter: Finger, Karsten

(56) Entgegenhaltungen:
- EP-A1- 2 019 054
- EP-A1- 2 460 745
- EP-A2- 0 745 545
- DE-A1- 10 348 516

## Beschreibung

Die vorliegende Erfindung betrifft zwei alternative Verfahren zum Einbringen einer in Querrichtung verlaufenden Achse in eine Öffnung einer in Förderrichtung verlaufenden Seitenwand eines elastomerhaltigen Fördergurtes, einen Fördergurt mit einer derartig vorgesehenen Achse sowie eine Förderanlage mit einem derartigen Fördergurt.

Auf dem Gebiet der Transport- oder Förderanlagen, insbesondere Langstreckenförderanlagen, sind seit langem Transport- oder Förderbänder bekannt, die über seitlich vorgesehene Rollen auf Seilen drehbar gelagert beweglich sind.

Eine derartige Förderanlage samt Fördergurt ist beispielsweise aus der EP 0 745 545 A2 bekannt. Der geschlossene Fördergurt weist einen sich in Förderrichtung erstreckenden Basisgurt sowie voneinander beabstandete Balken auf, die quer zur Förderrichtung auf dem Basisgurt befestigt sind. An den beiden freien Enden dieser Querbalken ist jeweils eine Seilrolle drehbar gelagert angeordnet, die auf längs des Basisgurtes geführten Tragseilen abrollt. Hierdurch wird die vom Gewicht des Fördermaterials (Transportgutes) auf den Fördergurt aufgebrachte Last an die Tragseile weitergeleitet. An den Seitenflächen sind sich seitlich des Basisgurtes erstreckende Wellkanten des Fördergurtes befestigt.

Auf der EP 0 745 545 A2 basierend schlägt die DE 130 48 516 A1 einen entsprechenden Fördergurt vor, dessen Querbalken im Wesentlichen aus durchgehenden Achsrohren gebildet sind, die an dem Basisgurt befestigt sind. Durch diese einteilige und in Querrichtung durchgängige Ausbildung der Querbalken als Achsrohr wird dessen Kippsicherheit gewährleistet. Zur Erhöhung der Beladung und Vermeidung des Herausfallens von Transportgut vom Fördergurt sind zur Aufnahme des Transportgutes in Förderrichtung verlaufende Seitenwände, auch Randprofile genannt, vorgesehen. Diese weisen Durchführungsöffnungen auf, durch die die durchgehenden Achsrohre geführt werden und aus denen die Achsrohre seitlich zur Aufnahme der Seilrollen herausragen.

Üblicherweise werden diese Durchführungsöffnungen als Profildurchbruch der Seitenwände durch Ausschneiden realisiert. In die hierbei erhaltenen einander in Querrichtung gegenüberliegenden Durchführungsöffnungen werden dann jeweils die Achsrohre eingesetzt und der verbleibende Zwischenraum ausgefüllt. In Abhängigkeit der dabei entstehenden Spaltmaße zwischen Achsrohr und Profildurchbruch wird der Zwischenraum mit Abdichtmasse oder aufgeklebten Gummiplatten abgedichtet. Wesentlicher Nachteil dieser Art des Achsrohreinbaus ist die dynamische Unbeständigkeit dieser Abdichtungen, so dass nach kurzer Laufzeit des Fördergurtes die Abdichtungen abfallen oder auch durch das Transportgut zerstört werden können. Damit kann durch diese Durchführungsöffnungen Schüttgut (Transportgut) austreten. Dies wiederum führt zur Anlagenverschmutzung und es entstehen zusätzliche Gefahrenmomente für Mensch und Umwelt durch herabfallendes Schüttgut. Zwangsläufig ergibt sich hierdurch ein hoher Service beim Betreiber. Auch geht so ein Teil des zu transportierenden Gutes verloren.

Alternativ können die Durchführungsöffnungen für die Achsrohre bei der Profilherstellung der Seitenwände bzw. des Fördergurtes in bestimmten Abständen durch entsprechende Formprofile bei der Seitenwandherstellung vorgesehen werden. Diese Methode ist jedoch sehr aufwendig und kostenintensiv, setzt sie doch voraus, dass die Abstände der Durchführungsöffnungen langfristig bekannt sind, um die entsprechenden Formen und Abstände realisieren zu können. D.h. dass durch dieses Verfahren wirtschaftlich lediglich Durchführungsöffnungen in den Seitenwänden in einem festvorgegeben Abstandsmaß in Förderrichtung vorgesehen werden können. Darüber hinaus sind den Abständen der Durchführungsöffnungen Grenzen durch die Formenabmaße gesetzt.

Die EP 2 019 054 A1 betrifft eine Förderanlage zum Transport von Gütern mit einem Förderband, welches an den beiden Enden der Anlage über Umlenktrommeln geführt ist und welches an der Unterseite von quer zur Bewegungsrichtung des Förderbandes ausgerichteten und in Bewegungsrichtung des Förderbandes voneinander im Abstand befindlichen Tragbalken befestigt ist, wobei an den beiden seitlichen Enden der Tragbalken jeweils Laufrollen gelagert sind, welche auf zwei längs der Anlage vorgesehenen Paaren von Tragseilen bzw. Tragschienen, die dem vorlaufenden Trum und dem rücklaufenden Trum des Förderbandes zugeordnet sind, abrollen. Das Förderband ist an der Unterseite von sich quer zu dessen Bewegungsrichtung erstreckenden Tragbalken befestigt, wobei sich zwischen dem Förderband und den Tragbalken jeweils eine elastische Dichtungsleiste befindet. Zum einem sind die sich zwischen den Tragbalken und dem Förderband befindlichen Dichtungsleisten 3 sowohl mit dem Förderband 1 als auch mit den Tragbalken 2 durch Klebung verbunden. Zum anderen sind die Dichtungsleisten mit dem Förderband durch Klebung verbunden und die Dichtungsleisten sind jeweils mit Verstärkungsleisten ausgebildet, welche an die Tragbalken anliegen und welche mit diesen nicht verklebt sind. Die Befestigung des Förderbandes und der Dichtungsleisten mit den Tragbalken erfolgt in diesem Fall mittels Schraubbolzen.

EP 2019054 A1 beschreibt einen Fördergurt gemäß dem Oberbegriff der Ansprüche 6 und 7.

Die Aufgabe der vorliegenden Erfindung ist es, ein Verfahren zum Einbringen einer in Querrichtung verlaufenden Achse in eine Öffnung einer in Förderrichtung verlaufenden Seitenwand eines elastomerhaltigen Fördergurtes bereit zu stellen, bei dem Profildurchbrüche in den Seitenwänden flexibel und variabel vorgesehen und sicher und nachhaltig abgedichtet werden können.

Die Aufgabe wird erfindungsgemäß durch die Merkmale der Verfahren nach den Ansprüchen 1 und 2 sowie durch die Fördergurte nach den Ansprüchen 6 und 7 und die Förderanlage nach Anspruch 8 gelöst. Vorteilhafte Weiterbildungen sind in den Unteransprüchen beschrieben.

Somit betrifft die vorliegende Erfindung grundsätzlich den Gedanken, die Zwischenräume der ausgestanzten bzw. ausgeschnittenen Öffnungen der Seitenwände, die zwischen den Seitenwänden selbst und einem zu fixierenden Körper entstehen, mit einem vulkanisierbaren Material abzudichten bzw. eine Aufnahmeabdichtung auszubilden. Dieser zu fixierende Körper kann entweder die Achse selbst sein, die dann entweder unlöslich, d.h. nicht zerstörungsfrei, oder löslich mit der Seitenwand verbunden wird, oder ein Zwischenelement wie ein Randprofil als Halterung, die selbst unlöslich mit der Seitenwand verbunden wird und ihrerseits die Achse entfernbar, z.B. mittels Verschrauben, aufnehmen kann, d.h. die Achse kann in dem Zwischenelement fixiert werden.

Dabei ist es vorteilhaft, die Öffnungen, die auch als Durchführungsöffnungen bezeichnet werden können, mittels Schneiden oder Stanzen in die Seitenwände einzubringen, da dies sehr einfach, flexibel und kostengünstig möglich ist. So können auf diese Weise lokale Bereiche des bereits ausvulkanisierten Fördergurtes an beliebigen Stellen bearbeitet und mit Durchführungsöffnungen versehen werden. Auch ist die Ausgestaltung der Öffnungen beliebig vorsehbar. Mit anderen Worten sind die Durchführungsöffnungen hierdurch an kein festes Raster, d.h. an feste Abstände in Förderrichtung, gebunden, was die Flexibilität der Herstellung derartiger Fördergurte erhöht. Hierdurch können auch spezielle Formen für die Profilherstellung des Fördergurtes bzw. dessen Seitenwände entfallen, die in ihrem Raster, d.h. Abständen, der Durchführungsöffnungen festgelegt sind.

Vorteilhaft ist es auch, diese Öffnungen mittels eines elastomerhaltigen Materials abzudichten bzw. diesen Bereich der Seitenwände mit einem elastomerhaltigen Material zu einer Aufnahmeabdichtung auszuformen und dieses dann lokal auszuvulkanisieren. Da der Fördergurt an sich bereits aus einem derartigen Material besteht, kann auf diese Weise über das ausvulkanisierte Material eine einfache, sichere und dynamisch beständige Verbindung zwischen der Achse bzw. dem Zwischenelement und der Seitenwand des Fördergurtes erreicht werden. Auch können derartige Vulkanisierprozesse auf kleinem Raum gezielt und flexibel ausgeführt werden, so dass hierdurch die Flexibilität der Positionierung der Öffnungen erhalten bleibt. Durch diese beständigere Abdichtung wird nicht nur das Austreten von Fördergut vermieden, sondern insgesamt der Wartungs- und Inspektionsaufwand des Fördergurtes reduziert.

Vorteilhaft ist auch, diese mittels dieser Verfahren derartige Durchführungsöffnungen nachträglich in Fördergurte eingebracht, d.h. nachgerüstet werden können.

Vorzugsweise ist die Achse gegenüber dem Zwischenelement und bzw. oder der Öffnung durch wenigstens eine Dichtung abgedichtet. Hierdurch kann auch dieser Zwischenraum gegen das Austreten von Fördergut oder Flüssigkeit, z.B. Regenwasser, abgedichtet werden. Vorzugsweise ist diese Dichtung eine Lippendichtung. Hierdurch kann eine einfache und wirksame Abdichtung des Zwischenraums zwischen Zwischenelement und Achse erfolgen, ohne die Lösbarkeit der Verbindung zwischen Zwischenelement und Achse einzuschränken.

Vorzugsweise wird durch das vulkanisierbare, elastomerhaltige Material eine Achsaufnahme ausgebildet, die die Kontaktfläche zwischen der Seitenwand und der Achse oder dem Zwischenelement vergrößert. Unter einer Achsaufnahme wird hierbei eine Formgebung des elastomeren Füllmaterials der Öffnungen zwischen Seitenwand und Achse bzw. Zwischenelement verstanden, die die Seitenwand im Bereich der Öffnung verstärkt. Vorteilhafterweise wird diese Achsaufnahme durch das elastomere Füllmaterial des Zwischenraums mittels einer entsprechenden Formgebung geschaffen, die im Wesentlichen in Querrichtung des Fördergurtes ausgebildet ist und den Kontaktbereich zwischen Achse bzw. Zwischenelemente und Seiten vergrößert und hierdurch verstärkt.

Zwei Ausführungsbeispiele und weitere Vorteile der Erfindung werden nachstehend im Zusammenhang mit den folgenden Figuren erläutert. Darin zeigt:
- Fig. 1a: eine perspektivische schematische Darstellung eines Abschnittes der Außenseite einer Seitenwand eines Fördergurtes vor der Einbringung einer Öffnung in diese;
- Fig. 1b: eine perspektivische schematische Darstellung eines Abschnittes der Innenseite der Seitenwand der Fig. 1a;
- Fig. 2a: eine perspektivische schematische Darstellung eines Abschnittes der Außenseite einer Seitenwand eines Fördergurtes nach der Einbringung einer Öffnung in diese;
- Fig. 2b: eine perspektivische schematische Darstellung eines Abschnittes der Innenseite der Seitenwand der Fig. 2a;
- Fig. 3a: eine perspektivische schematische Darstellung eines Abschnittes der Außenseite einer Seitenwand eines Fördergurtes nach der Ausvulkanisation dieser Öffnung;
- Fig. 3b: eine perspektivische schematische Darstellung eines Abschnittes der Innenseite der Seitenwand der Fig. 3a;
- Fig. 4: eine perspektivische schematische Darstellung eines Abschnittes eines Fördergurtes mit eingebrachter und ausvulkanisierter einfacher Achsaufnahmeabdichtung und Zwischenelement;
- Fig. 5: eine perspektivische schematische Darstellung eines Abschnittes eines Fördergurtes mit eingebrachter und ausvulkanisierter einfacher Achsaufnahmeabdichtung, Zwischenelement und Achse;
- Fig. 6a: eine perspektivische schematische Darstellung eines Abschnittes der Außenseite einer Seitenwand eines Fördergurtes mit Achsaufnahmeabdichtung, Zwischenelemente, Achse und zusätzlicher innenliegender (Lippen-)Dichtung;
- Fig. 6b: eine perspektivische schematische Darstellung eines Abschnittes der Innenseite der Seitenwand der Fig. 6a; und
- Fig. 7: eine perspektivische schematische Darstellung eines Abschnittes eines Fördergurtes mit eingebrachter und ausvulkanisierter Achsaufnahmeabdichtung, Zwischenelement, zusätzlicher innenliegender (Lippen-)Dichtung und Achse.

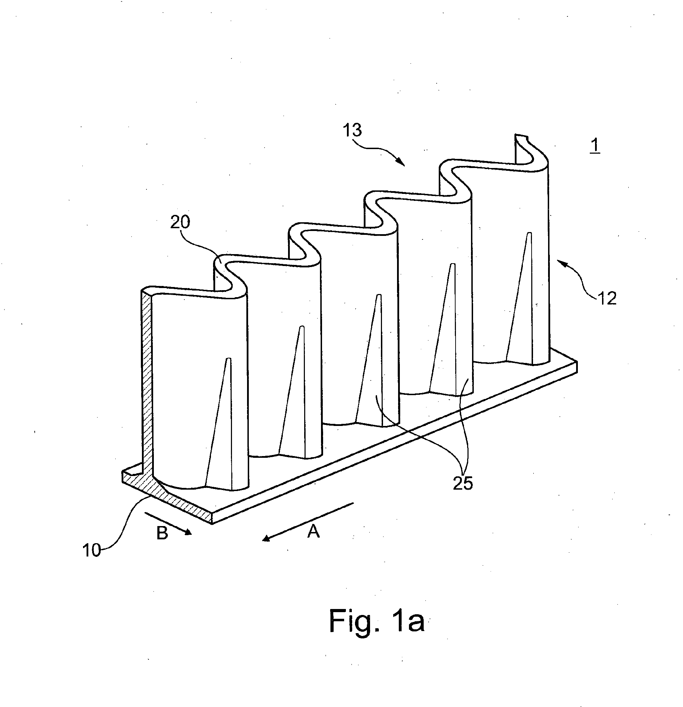

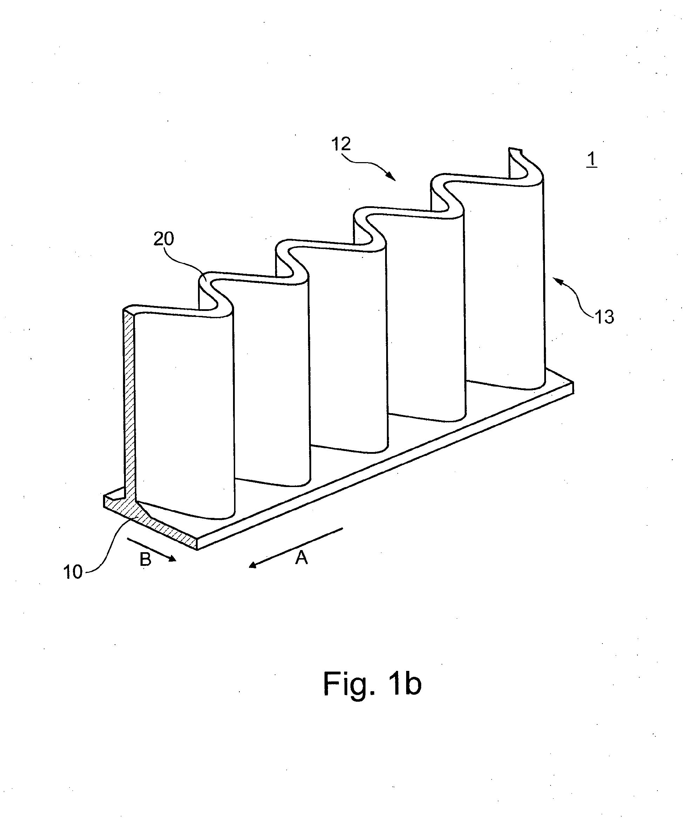

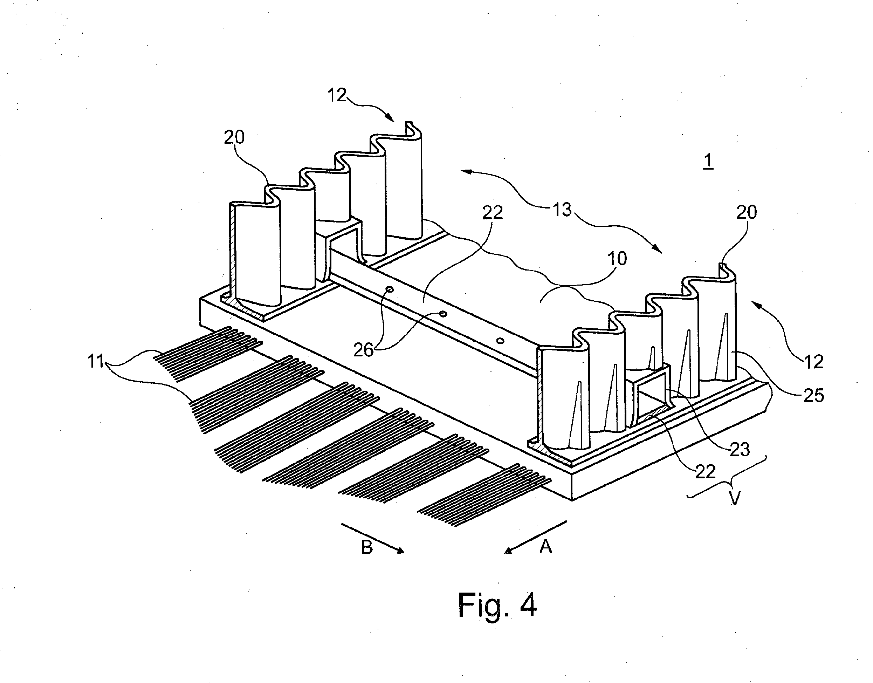

Fig. 1a zeigt eine perspektivische schematische Darstellung eines Abschnittes der Außenseite 12 einer Seitenwand 20 eines Fördergurtes 1 vor der Einbringung einer Öffnung 21 in diese; Fig. 1b zeigt eine perspektivische schematische Darstellung eines Abschnittes der Innenseite 13 der Seitenwand 20 der Fig. 1a. Der Fördergurt 1 weist einen sich in Förderrichtung A erstreckenden Basisgurt 10 auf, der mit Festigkeitsträgern 11, vorzugsweise Stahlseilen 11, verstärkt ist, vgl. Fig. 4, 5 und 7. An den Seitenkanten des Basisgurtes 10 sind ebenfalls in Förderrichtung A verlaufend jeweils Seitenwände 20 vorgesehen, die der seitlichen Begrenzung des Fördergutes dienen und dem Fördergurt 1 als Ganzes eine zusätzliche Stabilität verleihen. Diese sind in Querrichtung B durch die Förderfläche des Basisgurtes 10 voneinander beabstandet. Die Seitenwände 20 werden von der Außenseite 12 durch Stützelemente 25 in Querrichtung B durch diese verstärkt bzw. abgestützt.

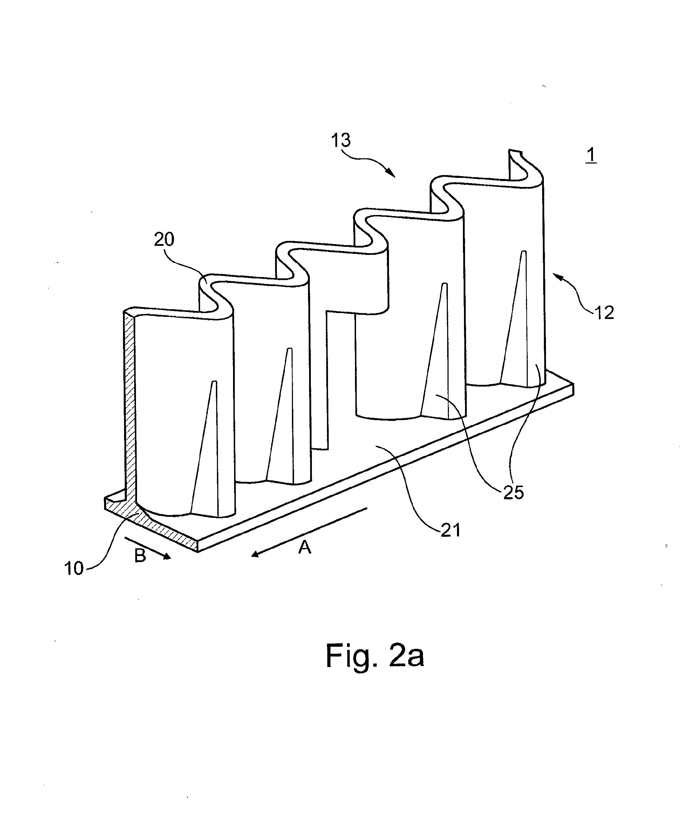

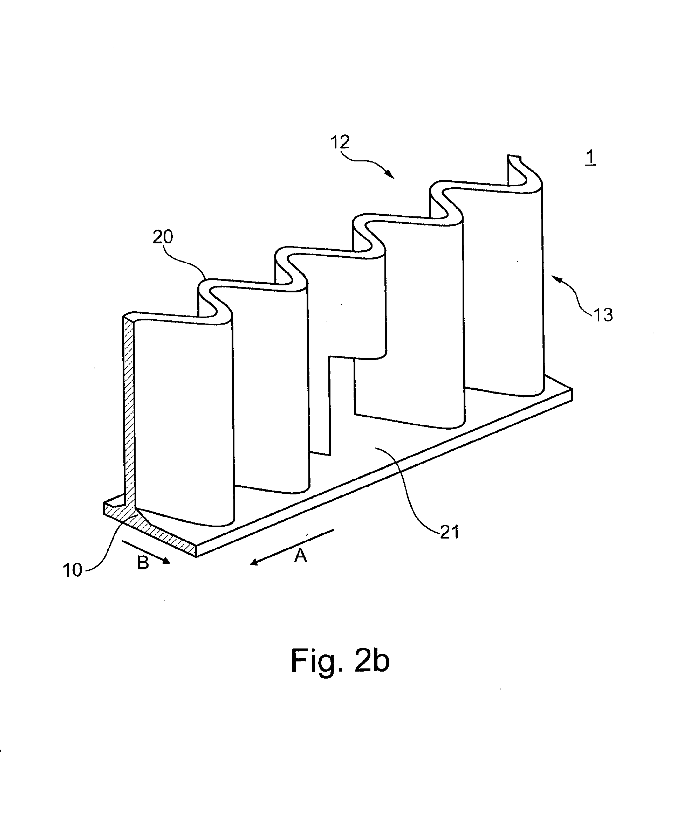

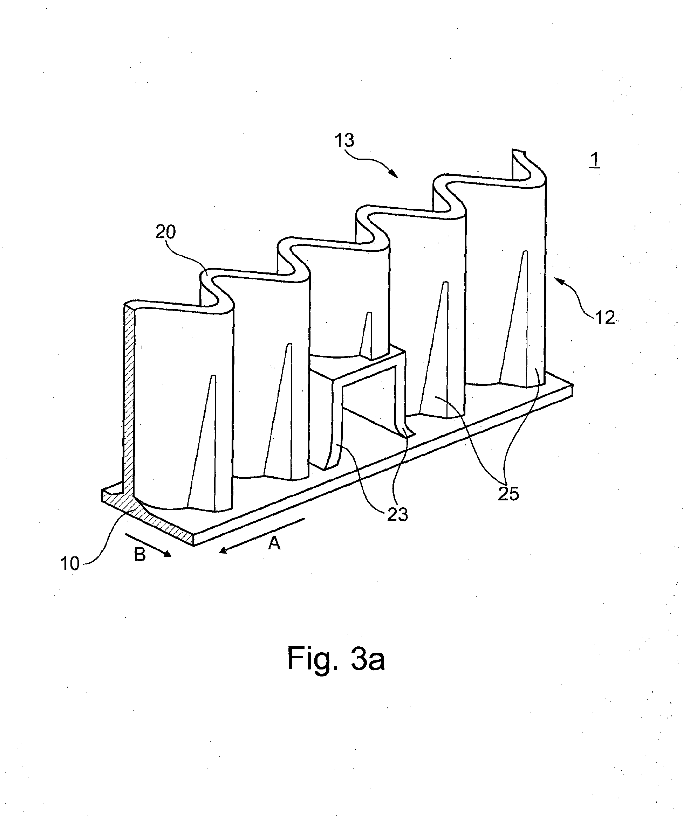

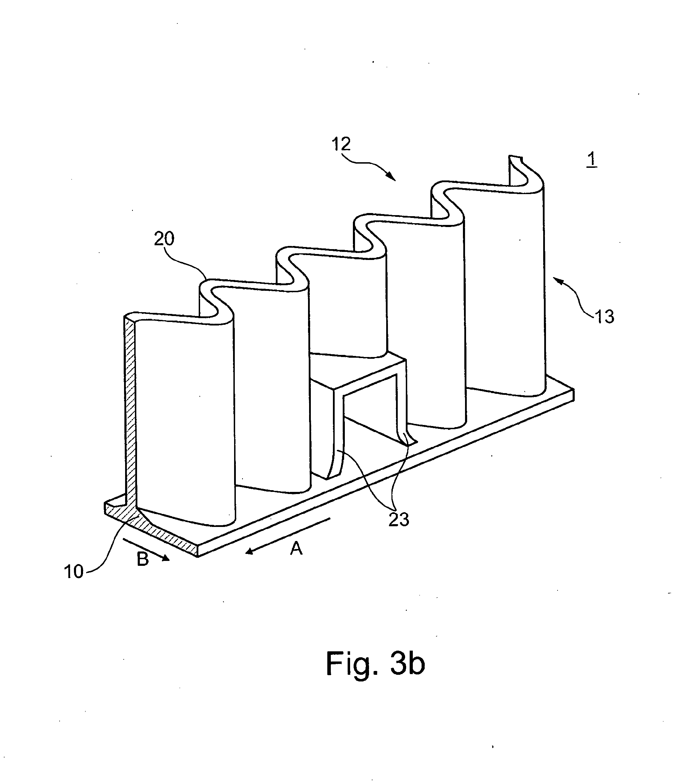

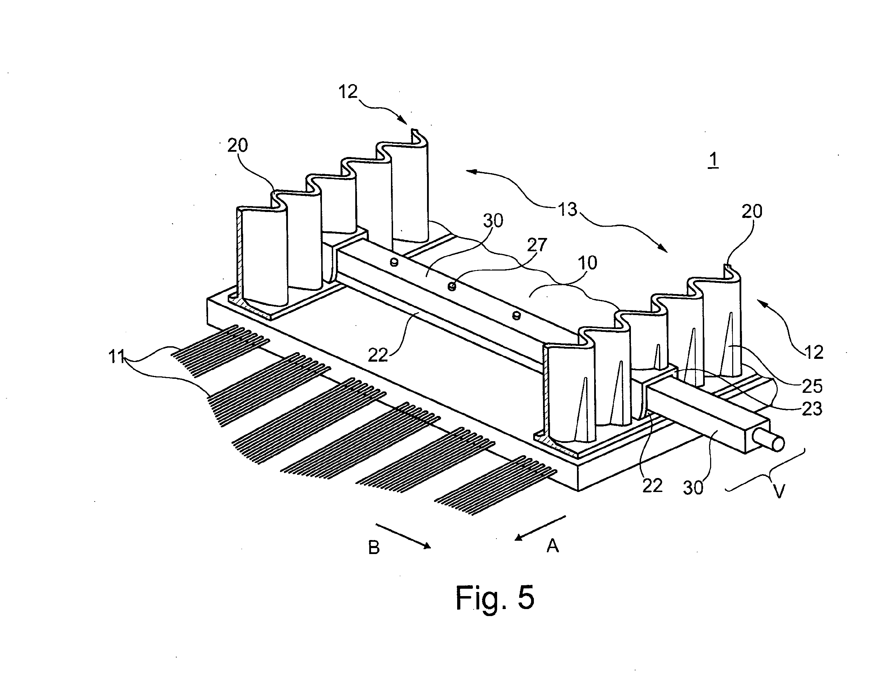

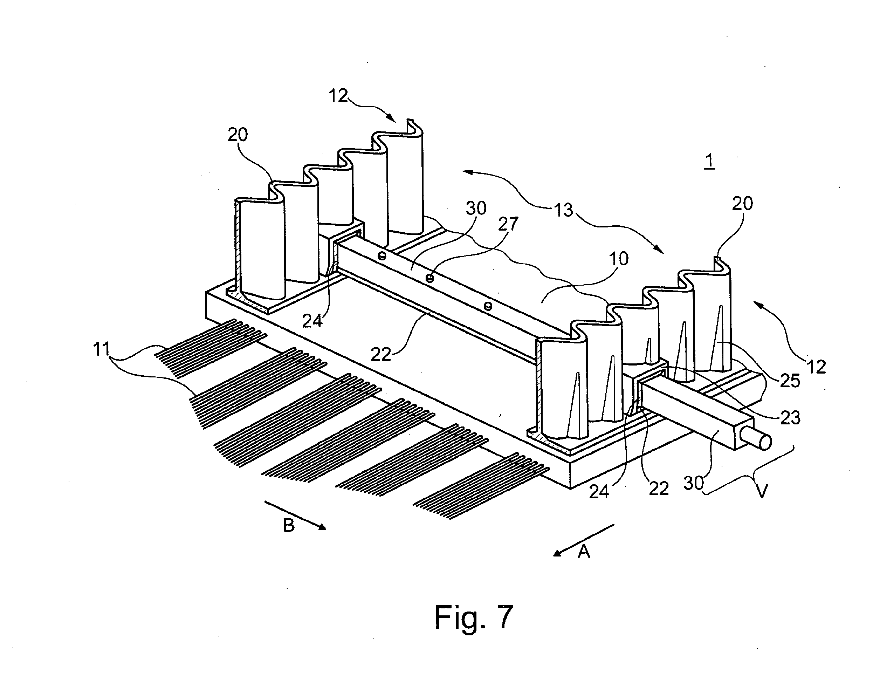

Um in einen derartigen Fördergurt 1 in Querrichtung B verlaufende Achsen 30 (vgl. Fig. 5 und 7) einbringen zu können, werden erfindungsgemäß Teilstücke aus den Seitenwänden 20 ausgestanzt oder ausgeschnitten. Dabei wird nur ein lokaler Bereich bearbeitet. Durch die ausgeschnittenen bzw. ausgestanzten Teilstücke werden Öffnungen 21 in den Seitenwänden 20 geschaffen, wie in den Fig. 2a und 2b als perspektivische schematische Darstellung gezeigt. Diese Öffnungen 21 können auch als Durchführungsöffnungen 21 bezeichnet werden, da eine Achse 30 durch zwei einander in Querrichtung B gegenüberliegenden Öffnungen 21 geführt wird, um den Fördergurt 1 mittels an ihren äußeren Enden vorgesehenen Rollen auf in Förderrichtung A parallel zum Fördergurt 1 verlaufender Seile beweglich abrollen zu lassen (nicht dargestellt). Um der Verbindung zwischen Achse 30 und Seitenwand 20 mehr Kontaktfläche zu geben und diesen Bereich der Seitenwand 20 zu verstärken, kann der Bereich der Öffnungen 21 als Achsaufnahme 23 oder auch einfache Achsaufnahmeabdichtung 23 ausgeformt werden, z.B. durch eine entsprechende Form, vgl. Fig. 3a und 3b.

Gemäß einem ersten Ausführungsbeispiel kann die Achse 30 direkt in die einfache Achsaufnahmedichtung 23 eingeführt werden. Gemäß einem zweiten Ausführungsbeispiel kann zusätzlich auch ein Zwischenelement 22 (Adapter 22) zur Achsaufnahme eingeführt werden, welches entweder die Achse 30 seinerseits vollständig oder teilweise aufnehmen kann; beide einander gegenüberliegenden Achsaufnahmeabdichtungen 23 können durch ein in Querrichtung B durchgehendes Zwischenelement 22 zur Achsaufnahme verbunden sein oder auch einzelne Zwischenelemente 22 aufweisen. In allen Fällen ist die einfache Achsaufnahmeabdichtung 23 zumindest geringfügig größer auszuformen als die äußere Kontur der Achse 30 bzw. des Zwischenelements 22. Beispielsweise ist ein Zwischenraum zwischen den inneren Abmaßen der einfachen Achsaufnahmeabdichtung 23 und der äußeren Kontur der Achse 30 bzw. des Zwischenelements 22 von ca. 2 mm vorzusehen, damit die Achse 30 bzw. das Zwischenelement 22 einerseits einfach, schnell und sicher in die einfache Achsaufnahmeabdichtung 23 eingeführt werden kann, jedoch der abzudichtende Zwischenraum möglichst gering bzw. nicht unnütz groß ist, um Zeit und Material bei der Abdichtung zu sparen. Diese Abdichtung erfolgt mit einem elastomerhaltigen Material.

Fig. 4 zeigt eine perspektivische schematische Darstellung eines Abschnittes eines Fördergurtes 1 mit eingebrachter und ausvulkanisierter einfacher Achsaufnahmeabdichtung 23 und Zwischenelement 22 in Form einer flachen und in Querrichtung B durchgehend verlaufenden Schiene 22, auf die die Achse 30 befestigt werden kann, z.B. über Befestigungsaufnahmen 26 in Form von Gewinden 26 für Schrauben 27 (vgl. Fig. 5 und 7). Fig. 5 ergänzt die Darstellung der Fig. 4 um eine in die einfache Achsaufnahmeabdichtung 23 eingebrachte Achse 30, welche z.B. mit Schrauben 27 oder Bolzen 27 als Befestigungsmittel 27 auf dieser befestigt ist. Der Bereich V wurde dabei lokal ausvulkanisiert, um das elastomerhaltige Material auszuhärten, welches die Zwischenräume zwischen Achse 30 bzw. Zwischenelement 22 und Öffnung 21 ausfüllt und die Achsaufnahmeabdichtung 23 ausbildet.

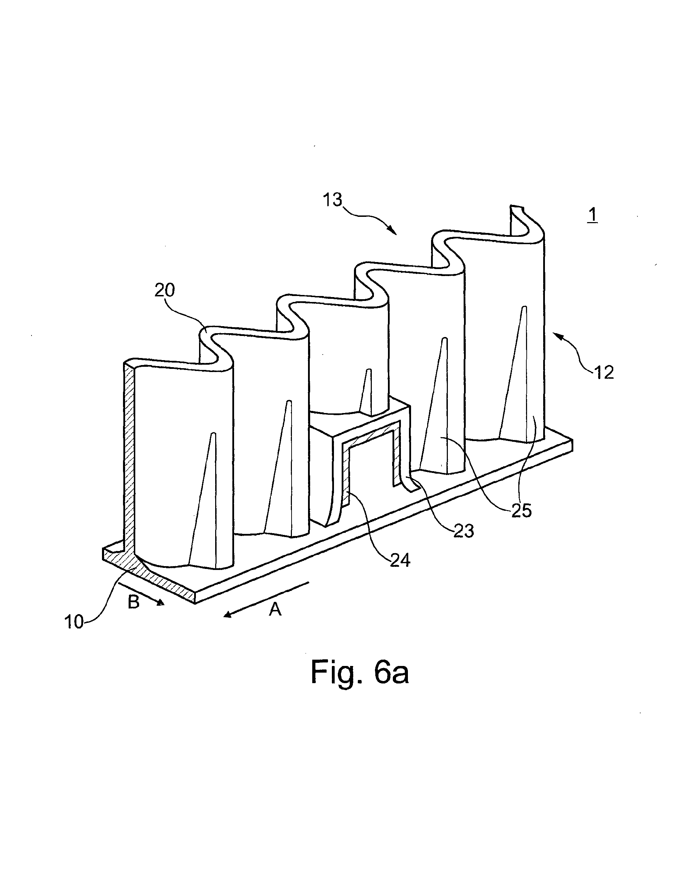

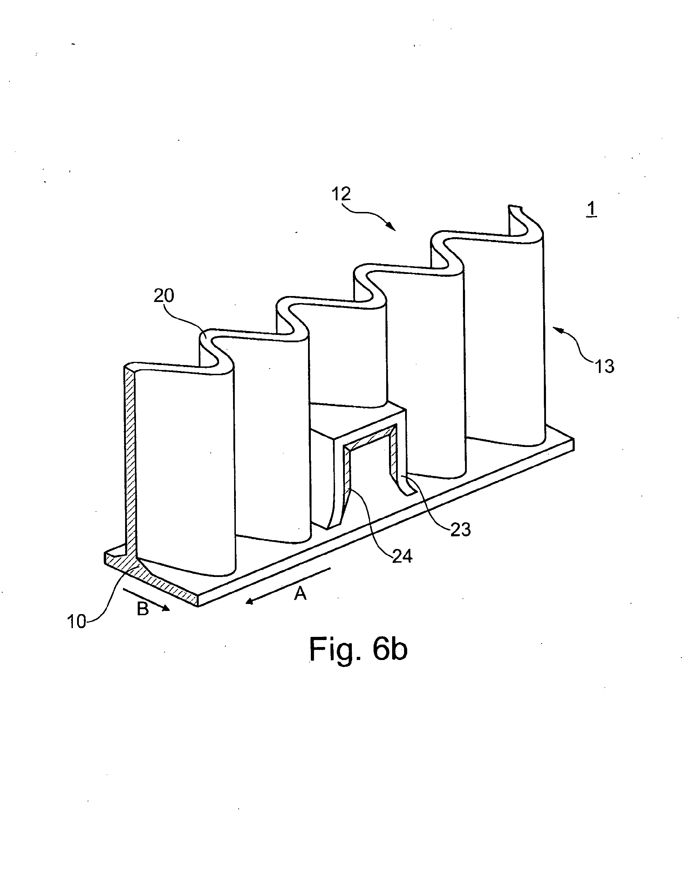

Fig. 6a zeigt eine perspektivische schematische Darstellung eines Abschnittes der Außenseite 12 einer Seitenwand 20 eines Fördergurtes 1 mit Achsaufnahmeabdichtung 23, Zwischenelement 22, Achse 30 und zusätzlicher innenliegender (Lippen-)Dichtung 24; Fig. 6b zeigt eine perspektivische schematische Darstellung eines Abschnittes der Innenseite 13 der Seitenwand 20 der Fig. 6a. Fig. 7 zeigt eine perspektivische schematische Darstellung eines Abschnittes eines Fördergurtes 1 mit eingebrachter und ausvulkanisierter zusätzlicher innenliegender Achsaufnahmeabdichtung 23, Zwischenelement 22, zusätzlicher innenliegender (Lippen-)Dichtung 24 und Achse 30. Die Dichtung 24 ist vorzugsweise als Lippendichtung 24 ausgeführt und derart vorgehen, dass sie je nach Ausführungsform der Öffnung 21 und ggfs. Achsaufnahmeabdichtung 23 eine sichere und zuverlässige Abdichtung dieser erreicht.

### Bezugszeichenliste

### (Teil der Beschreibung)

- A: Förderrichtung, Längsrichtung des Fördergurtes
- B: Querrichtung des Fördergurtes, senkrechtstehend zur Längsrichtung A
- V: zu vulkanisierender Bereich des Fördergurtes 1

- 1: Fördergurt
- 10: Basisgürt des Fördergurtes 1, zur Aufnahme des Fördergutes
- 11: Festigkeitsträger, insbesondere aus Textil oder als Stahlseile, vorzugsweise Stahlseile, des Basisgurtes 10
- 12: Außenseite des Fördergurtes 1
- 13: Innenseite des Fördergurtes 1
- 20: Seitenwände des Fördergurtes 1, zur seitlichen Begrenzung des Fördergutes
- 21: Öffnung in Seitenwand 20, in Querrichtung B verlaufend
- 22: Zwischenelement (Adapter) zwischen Öffnung 21 und Achse 30 zur Achsaufnahme
- 23: einfache Achsaufnahmeabdichtung der Seitenwand 20
- 24: zusätzliche (Lippen-)Dichtung zwischen Achsaufnahmeabdichtung 23 und Achse 30, innenliegend in der Achsaufnahmeabdichtung 23
- 25: Stützelement
- 26: Befestigungsaufnahmen
- 27: Befestigungsmittel
- 30: Achse

## Patentansprüche

1. Verfahren zum Einbringen einer in Querrichtung (B) verlaufenden Achse (30) in eine Öffnung (21) einer in Förderrichtung (A) verlaufenden Seitenwand (20) eines elastomerhaltigen Fördergurtes (1), insbesondere eines Fördergurtes (1) für eine Langstreckenförderanlage, mit den Schritten:
Ausstanzen oder Ausschneiden der Öffnung (21) aus der Seitenwand (20),
Einbringen der Achse (30) in die Öffnung (21),
Ausfüllen eines Zwischenraums zwischen der Achse (30) und der Öffnung (21) durch ein vulkanisierbares, elastomerhaltiges Material, und
Vulkanisieren wenigstens des Bereichs (V) der Öffnung (21) des Fördergurtes (1).

2. Verfahren zum Einbringen einer in Querrichtung (B) verlaufenden Achse (30) in eine Öffnung (21) einer in Förderrichtung (A) verlaufenden Seitenwand (20) eines elastomerhaltigen Fördergurtes (1), insbesondere eines Fördergurtes (1) für eine Langstreckenförderanlage, mit den Schritten:
Ausstanzen oder Ausschneiden der Öffnung (21) aus der Seitenwand (20),
Ausformen der Öffnung (21) zu einer Achsaufnahme (23) durch ein vulkanisierbares,
elastomerhaltiges Material,
Vulkanisieren wenigstens des Bereichs (V) der Achsaufnahme (23) des Fördergurtes (1),
Einbringen der Achse (30) in die Achsaufnahme (23), und
Fixieren der Achse (30) in der Achsaufnahme (23).

3. Verfahren nach Anspruch 2, ferner mit den Schritten:
Einbringen eines Zwischenelementes (22) in die Achsaufnahme (23),
Ausfüllen des Zwischenraums zwischen dem Zwischenelement (22) und der Achsaufnahme (23) durch ein vulkanisierbares, elastomerhaltiges Material,
Vulkanisieren wenigstens des Bereichs (V) der Achsaufnahme (23) des Fördergurtes (1), und
Fixieren der Achse (30) auf/in dem Zwischenelement (22).

4. Verfahren nach Anspruch 2 oder 3, wobei die Achse (30) gegenüber dem Zwischenelement (22) und/oder der Achsaufnahme (23) durch wenigstens eine Dichtung (24), vorzugsweise Lippendichtung (24), abgedichtet ist.

5. Verfahren nach einem der vorherigen Ansprüche, wobei durch das vulkanisierbare, elastomerhaltige Material aus der Öffnung (21) eine Achsaufnahme (23) derart ausgebildet wird, dass die Kontaktfläche zwischen der Seitenwand (20) und der Achse (30) und/oder dem Zwischenelement (22) vergrößert wird.

6. Fördergurt (1), insbesondere für eine Langstreckenförderanlage, aus einem elastomerhaltigen Material mit
einem langgestreckten Basisgurt (10) mit in Förderrichtung (A) verlaufenden Seitenwänden (20) mit wenigstens einer in Querrichtung (B) verlaufenden Achse (30), die in entsprechende Öffnungen (21) der Seitenwände (20) eingebracht ist, **dadurch gekennzeichnet,**
**dass** eine Öffnung (21) aus der Seitenwand (20) ausgestanzt oder ausgeschnitten ist, dass die Achse (30) in die Öffnung (21) eingebracht ist,
**dass** ein Zwischenraum zwischen der Achse (30) und den Öffnung (21) durch ein vulkanisierbares, elastomerhaltiges Material ausgefüllt ist, und
**dass** wenigstens der Bereich (V) der Öffnung (21) des Fördergurtes (1) vulkanisiert ist.

7. Fördergurt (1), insbesondere für eine Langstreckenförderanlage, aus einem elastomerhaltigen Material mit
einem langgestreckten Basisgurt (10) mit in Förderrichtung (A) verlaufenden Seitenwänden (20) mit wenigstens einer in Querrichtung (B) verlaufenden Achse (30), die in entsprechende Öffnungen (21) der Seitenwände (20) eingebracht ist, **dadurch gekennzeichnet,**
**dass** eine Öffnung (21) aus der Seitenwand (20) ausgestanzt oder ausgeschnitten ist, dass die Öffnung (21) durch ein vulkanisierbares, elastomerhaltiges Material zu einer Achsaufnahme (23) ausgeformt ist,
**dass** wenigstens der Bereich (V) der Öffnungen (21) des Fördergurtes (1) vulkanisiert ist,
**dass** die Achse (30) in die Achsaufnahme (23) eingebracht ist, und
**dass** die Achse (30) in der Achsaufnahme (23) fixiert ist.

8. Förderanlage mit einem Fördergurt (1) nach Anspruch 6 oder 7.

## Claims

1. Method for introducing an axle (30), running in the transverse direction (B), into an opening (21) of a side wall (20), running in the conveying direction (A), of an elastomer-containing conveyor belt (1), in particular of a conveyor belt (1) for a long-distance conveyor system, the method comprising the following steps:
- punching or cutting the opening (21) from the side wall (20);
- introducing the axle (30) into the opening (21) ;
- filling an intermediate space between the axle (30) and the opening (21) by way of an elastomer-containing material which is capable of vulcanization; and
- vulcanizing at least the region (V) of the opening (21) of the conveyor belt (1).

2. Method for introducing an axle (30), running in the transverse direction (B), into an opening (21) of a side wall (20), running in the conveying direction (A), of an elastomer-containing conveyor belt (1), in particular of a conveyor belt (1) for a long-distance conveyor system, the method comprising the following steps:
- punching or cutting the opening (21) from the side wall (20);
- shaping the opening (21) to form an axle receptacle (23) by way of an elastomer-containing material which is capable of vulcanization;
- vulcanizing at least the region (V) of the axle receptacle (23) of the conveyor belt (1);
- introducing the axle (30) into the axle receptacle (23); and
- fixing the axle (30) in the axle receptacle (23).

3. Method according to Claim 2, the method further comprising the following steps:
- introducing an intermediate element (22) into the axle receptacle (23);
- filling the intermediate space between the intermediate element (22) and the axle receptacle (23) by way of an elastomer-containing material which is capable of vulcanization;
- vulcanizing at least the region (V) of the axle receptacle (23) of the conveyor belt (1); and
- fixing the axle (30) on/in the intermediate element (22).

4. Method according to Claim 2 or 3, wherein the axle (30) is sealed in relation to the intermediate element (22) and/or to the axle receptacle (23) by at least one seal (24), preferably a lip seal (24).

5. Method according to one of the preceding claims, wherein by way of the elastomer-containing material, which is capable of vulcanization, from the opening (21) an axle receptacle (23) is configured in such a manner that the contact face between the side wall (20) and the axle (30) and/or the intermediate element (22) is enlarged.

6. Conveyor belt (1), in particular for a long-distance conveyor system, from an elastomer-containing material, having
- an elongated main belt (10) with side walls (20), running in the conveying direction (A), having at least one axle (30), running in the transverse direction (B), which is introduced into corresponding openings (21) of the side walls (20),
**characterized in**
- **that** an opening (21) is punched or cut from the side wall (20);
- **that** the axle (30) is introduced into the opening (21);
- **that** an intermediate space between the axle (30) and the opening (21) is filled by way of an elastomer-containing material which is capable of vulcanization; and
- **that** at least the region (V) of the opening (21) of the conveyor belt (1) is vulcanized.

7. Conveyor belt (1), in particular for a long-distance conveyor system, from an elastomer-containing material, having
- an elongated main belt (10) with side walls (20), running in the conveying direction (A), having at least one axle (30), running in the transverse direction (B), which is introduced into corresponding openings (21) of the side walls (20),
**characterized in**
- **that** an opening (21) is punched or cut from the side wall (20);
- **that** the opening (21) is shaped by way of an elastomer-containing material which is capable of vulcanization to form an axle receptacle (23);
- **that** at least the region (V) of the openings (21) of the conveyor belt (1) is vulcanized;
- **that** the axle (30) is introduced into the axle receptacle (23); and
- **that** the axle (30) is fixed in the axle receptacle (23).

8. Conveyor system having a conveyor belt (1) according to Claim 6 or 7.

## Revendications

1. Procédé d'introduction d'un axe (30) s'étendant dans la direction transversale (B) dans une ouverture (21) d'une paroi latérale (20) s'étendant dans la direction de transport (A) d'une courroie transporteuse (1) contenant un élastomère, en particulier d'une courroie transporteuse (1) pour une installation de transport sur de longues sections, comprenant les étapes suivantes :
estamper ou découper l'ouverture (21) dans la paroi latérale (20),
introduire l'axe (30) dans l'ouverture (21),
remplir un espace intermédiaire entre l'axe (30) et l'ouverture (21) avec un matériau vulcanisable contenant un,élastomère, et
vulcaniser au moins la région (V) de l'ouverture (21) de la courroie transporteuse (1).

2. Procédé l'introduction d'un axe (30) s'étendant dans la direction transversale (B) dans une ouverture (21) des parois latérales (20) s'étendant dans la direction de transport (A) d'une courroie transporteuse (1) contenant un élastomère, en particulier d'une courroie transporteuse (1) pour une installation de transport sur de longues sections, comprenant les étapes suivantes :
estamper ou découper l'ouverture (21) dans la paroi latérale (20),
former l'ouverture (21) en forme de logement d'axe (23) par un matériau vulcanisable, contenant un élastomère,
vulcaniser au moins la région (V) du logement d'axe (23) de la courroie transporteuse (1),
introduire l'axe (30) dans le logement d'axe (23), et
fixer l'axe (30) dans le logement d'axe (23).

3. Procédé selon la revendication 2, comprenant en outre les étapes suivantes :
introduire un élément intermédiaire (22) dans le logement d'axe (23),
remplir l'espace intermédiaire entre l'élément intermédiaire (22) et le logement d'axe (23) avec un matériau vulcanisable contenant un élastomère,
vulcaniser au moins la région (V) du logement d'axe (23) de la courroie transporteuse (1), et
fixer l'axe (30) sur/dans l'élément intermédiaire (22) .

4. Procédé selon la revendication 2 ou 3, dans lequel l'axe (30) est étanchéifié par rapport à l'élément intermédiaire (22) et/ou au logement d'axe (23) par au moins un joint d'étanchéité (24), de préférence un joint d'étanchéité à lèvre (24).

5. Procédé selon l'une quelconque des revendications précédentes, dans lequel un logement d'axe (23) est réalisé à partir de l'ouverture (21) par le matériau vulcanisable contenant un élastomère, de telle sorte que la surface de contact entre la paroi latérale (20) et l'axe (30) et/ou l'élément intermédiaire (22) soit agrandie.

6. Courroie transporteuse (1), en particulier pour une installation de transport sur de longues sections, constituée d'un matériau contenant un élastomère, comprenant
une courroie de base allongée (10) avec des parois latérales (20) s'étendant dans la direction de transport (A) et au moins un axe (30) s'étendant dans la direction transversale (B), qui est introduit dans des ouvertures correspondantes (21) des parois latérales (20),
**caractérisée**
**en ce qu'**une ouverture (21) est estampée ou découpée dans la paroi latérale (20),
**en ce que** l'axe (30) est introduit dans l'ouverture (21),
**en ce qu'**un espace intermédiaire entre l'axe (30) et l'ouverture (21) est rempli d'un matériau vulcanisable contenant un élastomère, et
**en ce qu'**au moins la région (V) de l'ouverture (21) de la courroie transporteuse (1) est vulcanisée.

7. Courroie transporteuse (1) en particulier pour une installation de transport sur de longues sections,
constituée d'un matériau contenant un élastomère, comprenant
une courroie de base allongée (10) avec des parois latérales (20) s'étendant dans la direction de transport (A) et au moins un axe (30) s'étendant dans la direction transversale (B), qui est introduit dans des ouvertures correspondantes (21) des parois latérales (20),
**caractérisée**
**en ce qu'**une ouverture (21) est estampée ou découpée dans la paroi latérale (20),
**en ce que** l'ouverture (21) est formée en forme de logement d'axe (23) par un matériau vulcanisable, contenant un élastomère,
**en ce qu'**au moins la région (V) des ouvertures (21) de la courroie transporteuse (1) est vulcanisée,
**en ce que** l'axe (30) est introduit dans le logement d'axe (23), et
**en ce que** l'axe (30) est fixé dans le logement d'axe (23).

8. Installation de transport comprenant une courroie transporteuse (1) selon la revendication 6 ou 7.
